# FASCICULE DE BREVET EUROPEEN

(11) **EP 0 568 444 B1**
(45) Date de publication et mention de la délivrance du brevet: **13.03.1996**
(21) Numéro de dépôt: 93401091.9
(22) Date de dépôt: 27.04.1993
(51) Int. Cl.: B60H 1/00

(54) **Dispositif de ventilation de l'habitacle d'un véhicule automobile**
Belüftungsvorrichtung für den Innenraum eines Kraftfahrzeuges
Ventilating device for the interior of a motor vehicle

(30) Priorité: 28.04.1992 FR 9205242
(43) Date de publication de la demande: 03.11.1993
(73) Titulaire: Valeo Climatisation, F-78321 La Verrière (FR)
(72) Inventeur: Becquerel, Michel, F-78320 Le Mesnil Saint-Denis (FR)
(74) Mandataire: Gamonal, Didier

(56) Documents cités:
- EP-A- 0 416 523
- FR-A- 2 373 017
- GB-A- 2 083 610
- PATENT ABSTRACTS OF JAPAN vol. 10, no. 191 (M-495)(2247) 4 Juillet 1986 & JP-A-61 36 014 (SUZUKI MOTOR)
- PATENT ABSTRACTS OF JAPAN vol. 7, no. 215 (M-244)(1360) 22 Septembre 1983 & JP-A-58 110 318 (NIPPON DENSO)

## Description

L'invention concerne un dispositif de ventilation de l'habitacle d'un véhicule automobile, propre à introduire dans l'habitacle soit un flux d'air provenant de l'extérieur de l'habitacle, soit un flux d'air provenant de l'intérieur de celui-ci, encore appelé "air recyclé".

Ainsi, lorsque le véhicule automobile traverse une zone particulièrement polluée, il est possible de ventiler l'habitacle avec de l'air non vicié prélevé à l'intérieur de celui-ci.

On connaît déjà un dispositif de ventilation de l'habitacle d'un véhicule automobile, qui comporte une première entrée pour de l'air provenant de l'extérieur de l'habitacle, un premier volet contrôlant cette première entrée, une deuxième entrée pour de l'air provenant de l'intérieur de l'habitacle, un deuxième volet contrôlant cette deuxième entrée, une sortie d'air alimentée par la première entrée et la deuxième entrée, débouchant dans l'habitacle et logeant un groupe moto-ventilateur à vitesse réglable, ainsi qu'un organe de commande unique agissant sur le premier volet et le deuxième volet ainsi que sur la vitesse du ventilateur. Cet organe de commande unique permet donc à la fois de régler la position des volets et la vitesse du ventilateur.

Ce dispositif connu possède trois configurations de volets différentes : une configuration neutre, une configuration "air extérieur" et une configuration "air intérieur", encore appelée "air recyclé".

Dans la configuration neutre, le premier volet est dans une position de fermeture de la première entrée et le deuxième volet dans une position de fermeture de la deuxième entrée, le ventilateur étant réglé à vitesse nulle.

Dans la configuration "air extérieur", le deuxième volet est dans une position de fermeture de la deuxième entrée, tandis que le premier volet est dans une position d'ouverture totale de la première entrée. Dans cette configuration, la vitesse du ventilateur peut être réglée, mais les positions respectives des deux volets restent inchangées.

Dans la configuration "air intérieur", le premier volet est en position de fermeture de la première entrée, tandis que le deuxième volet est dans une position d'ouverture totale de la deuxième entrée. Dans cette configuration, la vitesse du ventilateur peut être réglée, mais les positions respectives des deux volets restent inchangées.

Il en résulte que, si l'on souhaite passer de la configuration "air extérieur" à la configuration "air intérieur", ou inversement, il faut déplacer l'un des volets de sa position de fermeture à sa position d'ouverture totale et l'autre volet de sa position d'ouverture totale à sa position de fermeture, puis régler la vitesse du groupe moto-ventilateur.

Il en résulte un temps de réponse élevé, d'autant plus que les volets sont généralement montés pivotants avec un angle de débattement important entre leurs positions de fin de course qui correspondent respectivement à la position de fermeture et la position d'ouverture totale.

L'invention a notamment pour but de surmonter les inconvénients précités.

C'est en particulier un but de l'invention de procurer un dispositif de ventilation du type précité qui diminue les temps de réponse à la commande lorsque l'utilisateur désire changer de configuration, c'est-à-dire de mode de distribution du flux d'air dans l'habitacle.

L'invention propose à cet effet un dispositif de ventilation de l'habitacle, du type défini en introduction, ce dispositif comportant :
- une configuration neutre dans laquelle le premier volet est dans une position de fermeture de la première entrée, tandis que le deuxième volet est dans une position de fermeture de la deuxième entrée, et que la vitesse du ventilateur est nulle;
- plusieurs configurations "air extérieur" dans lesquelles le deuxième volet est en position de fermeture de la deuxième entrée tandis que le premier volet est déplacé progressivement d'une position d'ouverture partielle à une position d'ouverture totale de la première entrée et que la vitesse du ventilateur est progressivement augmentée; et
- plusieurs configurations "air intérieur" dans lesquelles le premier volet est en position de fermeture de la première entrée, tandis que le deuxième volet est déplacé progressivement d'une position d'ouverture partielle à une position d'ouverture totale de la deuxième entrée, et que la vitesse du ventilateur est progressivement augmentée.

Ainsi, dans les configurations "air extérieur", le premier volet peut prendre plusieurs positions différentes, tandis que dans les configurations "air intérieur", le deuxième volet peut prendre plusieurs positions différentes.

Le passage d'une configuration "air extérieur" à une configuration "air intérieur" ou inversement s'effectue toujours en passant par la configuration neutre et par un déplacement progressif des deux volets.

Il n'existe donc plus de temps morts lors de la commande du premier et du deuxième volets, comme c'était le cas dans la technique antérieure.

Dans une forme de réalisation préférée de l'invention, le premier volet et le deuxième volet sont chacun montés à pivotement autour d'un axe de rotation. Les axes de rotation respectifs du premier et du deuxième volet sont de préférence parallèles.

Dans une forme de réalisation préférée de l'invention, le premier volet est déplaçable depuis la position de fermeture de la première entrée jusqu'à la position d'ouverture totale de la première entrée, et inversement, par rotations successives d'une fraction de tour chacune. De même, le deuxième volet est déplaçable de la position de fermeture de la deuxième entrée jusqu'à la position d'ouverture totale de la deuxième entrée, et inversement, par rotations successives d'une fraction de tour chacune.

Avantageusement, le premier et le deuxième volet sont disposés de telle sorte que, dans leurs positions de fermeture respectives, le premier et le deuxième volet sont éloignés tandis que, dans la position d'ouverture totale de la première entrée et dans la position d'ouverture totale de la deuxième entrée, le premier volet et le deuxième volet sont à chaque fois rapprochés.

Avantageusement, le dispositif comporte le même nombre de configurations "air extérieur", de configurations "air intérieur" et de vitesses du ventilateur. Ainsi, à chaque configuration "air extérieur" correspond une configuration symétrique "air intérieur" et une vitesse donnée du ventilateur.

De préférence, la vitesse du ventilateur est réglable de façon discontinue, c'est-à-dire par incréments.

Dans la description qui suit, faite seulement à titre d'exemple, on se réfère aux dessins annexés, sur lesquels :
- la figure 1 est une vue en coupe partielle schématique d'un dispositif de ventilation selon l'invention représenté dans sa configuration neutre;
- la figure 2 est une vue analogue à celle de la figure 1 montrant le même dispositif dans plusieurs configurations "air extérieur"; et
- la figure 3 est une vue analogue à celle de la figure 1 montrant le même dispositif dans plusieurs configurations "air intérieur".

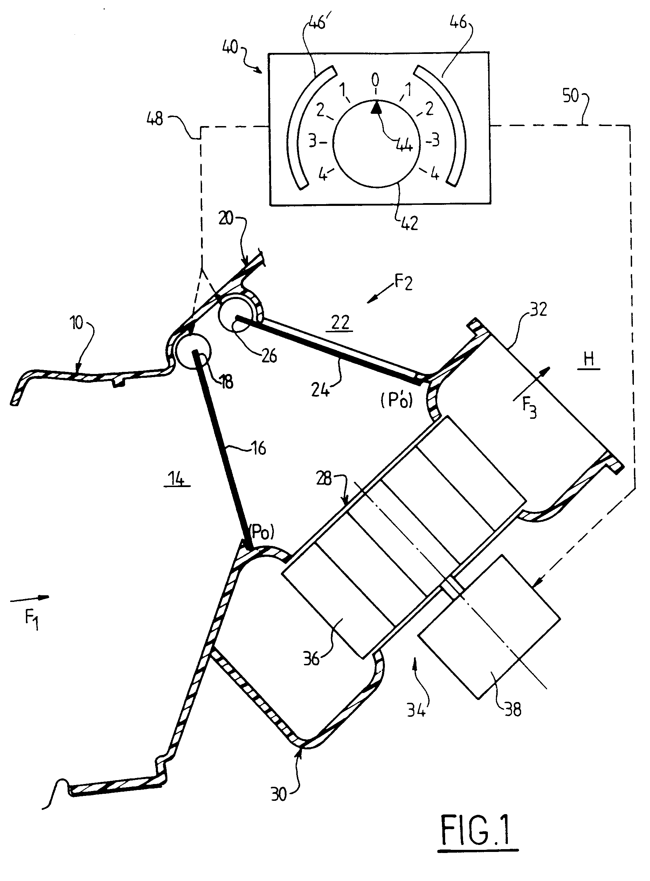

On se réfère tout d'abord à la figure 1 qui représente un dispositif destiné à ventiler l'habitacle H d'un véhicule automobile. Le dispositif comprend une conduite 10 propre à prélever un flux d'air provenant de l'extérieur de l'habitacle (flèche F₁). Le conduit 10 alimente une première entrée 14 contrôlée par un volet 16 monté à pivotement autour d'un axe 18.

Le dispositif comprend en outre un conduit 20 propre à recevoir un flux d'air provenant de l'habitacle H, c'est-à-dire un flux d'air recyclé (flèche F₂). Le conduit 20 alimente une deuxième entrée 22, qui est contrôlée par un deuxième volet 24 monté à pivotement autour d'un axe 26 qui s'étend parallèlement à l'axe 18 et à proximité de celui-ci. Les entrées 14 et 22 alimentent une sortie commune 28 qui débouche dans l'habitacle H. La sortie 28 constitue en même temps l'admission d'une enceinte 30 en forme de volute qui comporte une conduite de sortie 32. L'enceinte 30 loge intérieurement un groupe moto-ventilateur 34 comportant une turbine 36 propre à être entraînée en rotation par un moteur 38 à plusieurs vitesses. Dans l'exemple, le moteur 38 possède, en dehors d'une vitesse nulle, quatre vitesses différentes, le passage d'une vitesse à une autre se faisant par incréments successifs.

Comme montré à la figure 1, la première entrée 14 et la deuxième entrée 22 sont situées en vis-à-vis l'une de l'autre en formant entre elles un angle voisin de 45°.

Le dispositif de l'invention comprend en outre un organe de commande unique 40 comportant, dans l'exemple, un bouton rotatif 42 portant un index 44 déplaçable en regard d'une échelle graduée portant un repère "0".

L'échelle comporte une plage 46 portant des repères 1, 2, 3 et 4, disposés dans le sens horaire à partir de la position 0 et correspondant à des configurations "air extérieur" ainsi qu'une plage 46' portant des repères 1, 2, 3 et 4, disposés dans le sens anti-horaire à partir de la position 0, et correspondant à des configurations "air intérieur".

Le bouton rotatif 42 peut être amené dans l'une ou l'autre des neuf positions mentionnées précédemment. L'organe 40 commande simultanément le déplacement des volets 16 et 24 par l'intermédiaire d'une liaison mécanique ou électrique 48 connue en soi, ainsi que la vitesse du moteur 38 du ventilateur 34 par l'intermédiaire d'une liaison électrique 50. Le ventilateur est à vitesse nulle lorsque l'index 44 est en regard du repère 0 et il tourne à une première vitesse V₁, à une deuxième vitesse V₂ plus élevée, à une troisième vitesse V₃ encore plus élevée et à une vitesse maximale V₄ lorsque l'index 44 se trouve respectivement en regard de l'un ou l'autre des repères 1, des repères 2, des repères 3 et des repères 4.

Le dispositif peut prendre une première configuration, appelée "configuration neutre", dans laquelle le premier volet est dans une position P₀ de fermeture de la première entrée 14 et le deuxième volet 24 dans une position P'₀ de fermeture de la deuxième entrée 22 (figure 1). Dans cette configuration, les volets 16 et 24 sont éloignés l'un de l'autre et forment entre eux un angle voisin de 45°. Cette position est obtenue en plaçant l'index 44 du bouton 42 en regard du repère 0, le ventilateur étant réglé sur une vitesse nulle. L'habitacle H ne peut recevoir ni de l'air provenant de l'extérieur, ni de l'air provenant de l'intérieur.

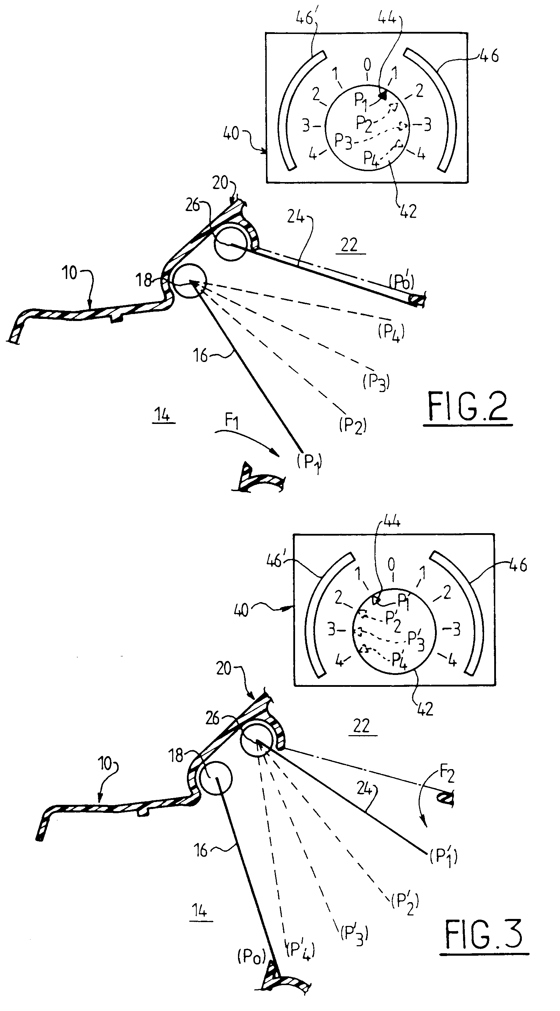

Le volet 16 est déplaçable de la position P₀ vers plusieurs positions successives P₁, P₂, P₃, P₄ (figure 2), le passage d'une position à une autre se faisant à chaque fois par rotation d'une fraction de tour.

Dans la position P₁, le premier volet 16 ouvre partiellement l'entrée 14 et dans la position P₄, le volet 16 ouvre totalement l'entrée 14. Le passage de la position P₀ à P₄ ou inversement correspond à un débattement angulaire du volet sensiblement égal à 45°.

Le second volet 24 est déplaçable de la position P'₀ de fermeture de la deuxième entrée 22 vers plusieurs positions d'ouverture successives P'₁, P'₂, P'₃, P'₄, (figure 3). Dans la position P'₁, le volet 24 ouvre partiellement l'entrée 22 et dans la position P'₄ il ouvre totalement l'entrée 22. Le débattement angulaire du volet entre ces deux positions extrêmes est sensiblement égal à 45°. Il est à noter que les volets 16 et 24 sont rapprochés lorsque le volet 16 est en position P₄ et le volet 24 en position P'₀ (figure 2) et lorsque le volet 16 est en position P₀ et le volet 24 en position P'₄ (figure 3).

On comprendra que dans la position P₁ ou P'₁, la position P₂ ou P'₂, la position P₃ ou P'₃, et la position P₄ ou P'₄, le ventilateur tourne respectivement à une vitesse V₁, V₂, V₃ et V₄, avec V₁ < V₂ < V₃ < V₄.

Pour passer de la configuration neutre (figure 1) aux configurations "air extérieur" (figure 2), il suffit de tourner le bouton 42 dans le sens horaire pour amener l'index 44 en regard du repère 1, 2, 3 ou 4 désiré, ce qui assure le déplacement progressif du volet 16 et l'augmentation progressive de la vitesse du ventilateur. Dans la position P₄ de pleine ouverture de l'entrée 14, le volet 16 permet un débit d'air maximal à travers l'entrée 14 et le ventilateur tourne à sa vitesse maximale.

Si l'on désire ensuite placer le dispositif dans une configuration "air intérieur", il suffit de faire tourner le bouton 42 dans le sens anti-horaire pour que l'index 44 vienne en regard du repère 1, 2, 3 ou 4 désiré des configurations "air intérieur", en passant par la configuration neutre.

Au-delà de la position neutre, le volet 24 pivote de la position P'₀ à la position P'₁ (figure 3) et peut être amené ensuite successivement dans les positions P'₂, P'₃ et P'₄. Dans cette dernière position, le flux d'air intérieur est maximal et la vitesse du ventilateur est également maximale.

On comprendra que les volets 16 et 24 peuvent adopter neuf positions différentes et que le passage d'une position à une autre s'effectue de façon progressive en faisant pivoter un seul des deux volets, et cela sur une fraction de tour, tout en faisant varier progressivement la vitesse du ventilateur. De ce fait, il n'existe pas de temps morts à la commande et le passage d'une configuration "air extérieur" à une configuration "air intérieur" ou inversement s'effectue de manière très rapide.

Il est bien entendu que l'invention n'est pas limitée à la forme de réalisation décrite précédemment et qu'elle s'étend à d'autres variantes.

Ainsi, au lieu de prévoir un réglage incrémental des deux volets et de la vitesse du ventilateur, on pourrait prévoir un réglage continu.

## Revendications

1. Dispositif de ventilation de l'habitacle d'un véhicule automobile, comportant une première entrée (14) pour de l'air provenant de l'extérieur de l'habitacle (H), un premier volet (16) contrôlant cette première entrée (14), une deuxième entrée (22) pour de l'air provenant de l'intérieur de l'habitacle (H), un deuxième volet (24) contrôlant cette deuxième entrée (22), une sortie d'air (28) alimentée par la première entrée et la deuxième entrée, débouchant dans l'habitacle et logeant un ventilateur (34) à vitesse réglable, ainsi qu'un organe de commande unique (40) agissant sur le premier volet (16) et le deuxième volet (24) et sur la vitesse du ventilateur (34), le dit dispositif comportant:
- une configuration neutre dans laquelle le premier volet (16) est dans une position (P₀) de fermeture de la première entrée (16) et le deuxième volet (24) dans une position (P'₀) de fermeture de la deuxième entrée (22), et dans laquelle la vitesse du ventilateur (30) est nulle;
- plusieurs configurations "air extérieur" dans lesquelles le deuxième volet (24) est en position (P'₀) de fermeture de la deuxième entrée (22), tandis que le premier volet (16) est déplacé progressivement d'une position d'ouverture partielle (P₁) à une position d'ouverture totale (P₄) de la première entrée (14) et que la vitesse du ventilateur (34) est progressivement augmentée; et
- plusieurs configurations "air intérieur" dans lesquelles le premier volet (16) est en position (P₀) de fermeture de la première entrée (14), tandis que le deuxième volet (24) est déplacé progressivement d'une position d'ouverture partielle (P'₁) à une position d'ouverture totale (P'₄) de la deuxième entrée (22) et que la vitesse du ventilateur est progressivement augmentée.

2. Dispositif selon la revendication 1, caractérisé en ce que le premier volet (16) et le deuxième volet (24) sont chacun montés à pivotement autour d'un axe de rotation (18,26).

3. Dispositif selon la revendication 2, caractérisé en ce que les axes de rotation respectifs (18,26) du premier volet (16) et du second volet (24) sont parallèles.

4. Dispositif selon l'une des revendications 2 et 3, caractérisé en ce que le premier volet (16) est déplaçable depuis la position (P₀) de fermeture de la première entrée (14) jusqu'à la position d'ouverture totale (P₄) de la première entrée (14), et inversement, par rotations successives d'une fraction de tour chacune, et en ce que le deuxième volet (24) est déplaçable depuis la position (P'₀) de fermeture de la deuxième entrée (22) jusqu'à la position d'ouverture totale (P'₄) de la deuxième entrée (22), et inversement, par rotations successives d'une fraction de tour chacune.

5. Dispositif selon la revendication 4, caractérisé en ce que, dans la configuration neutre, le premier volet (16) et le deuxième volet (24) sont éloignés tandis que, dans la position d'ouverture totale (P₄) de la première entrée (14), de même que dans la position d'ouverture totale (P'₄) de la deuxième entrée (22), le premier et le deuxième volet sont à chaque fois rapprochés.

6. Dispositif selon l'une des revendications 1 à 5, caractérisé en ce qu'il comporte le même nombre de configurations "air extérieur", de configurations "air intérieur" et de vitesses différentes du ventilateur (34).

## Claims

1. Device for ventilating the passenger compartment of a motor vehicle, having a first inlet (14) for the air coming from outside the passenger compartment (H), a first flap (16) controlling this first inlet (14), a second inlet (22) for the air coming from inside the passenger compartment (H), a second flap (24) controlling this second inlet (22), an air outlet (28) fed by the first inlet and the second inlet, opening out into the passenger compartment and housing an adjustable-speed fan (34), and a single control means (40) acting on the first flap (16) and the second flap (24) and on the speed of the fan (34), the said device having:
- a neutral configuration in which the first flap (16) is in a position (P₀) of closure of the first inlet (16) and the second flap (24) in a position (P'₀) of closure of the second inlet (22), and in which the speed of the fan (30) is nil;
- several "exterior air" configurations in which the second flap (24) is in the position (P'₀) of closure of the second inlet (22), whilst the first flap (16) is moved progressively from a position of partial opening (P₁) to a position of full opening (P₄) of the first inlet (14) and the speed of the fan (34) is progressively increased; and
- several "interior air" configurations in which the first flap (16) is in the position (P₀) of closure of the first inlet (14), whilst the second flap (24) is moved progressively from a position of partial opening (P'₁) to a position of full opening (P'₄) of the second inlet (22) and the speed of the fan is progressively increased.

2. Device according to Claim 1, characterised in that the first flap (16) and the second flap (24) are each mounted so as to pivot about an axis of rotation (18, 26).

3. Device according to Claim 2, characterised in that the respective axes of rotation (18, 26) of the first flap (16) and of the second flap (24) are parallel.

4. Device according to one of Claims 2 and 3, characterised in that the first flap (16) is movable from the position (P₀) of closure of the first inlet (14) to the position of full opening (P₄) of the first inlet (14), and vice versa, by successive rotations each of a fraction of a turn, and in that the second flap (24) is movable from the position (P'₀) of closure of the second inlet (22) to the position of full opening (P'₄) of the second inlet (22), and vice versa, by successive rotations each of a fraction of a turn.

5. Device according to Claim 4, characterised in that, in the neutral configuration, the first flap (16) and the second flap (24) are away from each other whilst, in the position of full opening (P₄) of the first inlet (14), and in the position of full opening (P'₄) of the second inlet (22), the first and second flaps are in each case close to each other.

6. Device according to one of Claims 1 to 5, characterised in that it has the same number of "exterior air" configurations, "interior air" configurations and different speeds of the fan (34).

## Patentansprüche

1. Belüftungsvorrichtung für den Innenraum eines Kraftfahrzeugs, bestehend aus einem ersten Lufteinlaß (14) für außerhalb des Fahrgastraums (H) aufgenommene Luft, einer ersten Klappe (16) zur Steuerung dieses ersten Lufteinlasses (14), einem zweiten Lufteinlaß (22) für aus dem Innern des Fahrgastraums (H) kommende Luft, einer zweiten Klappe (24) zur Steuerung dieses zweiten Lufteinlasses (22) und einem Luftauslaß (28) mit Luftzufuhr durch den ersten Lufteinlaß und den zweiten Lufteinlaß, der in den Fahrgastraum führt und in dem ein Lüftersatz (34) mit verstellbarer Drehzahl angeordnet ist, sowie einem alleinigen Betätigungsorgan (40), das auf die erste Klappe (16) und auf die zweite Klappe (24) sowie auf die Drehzahl des Lüfters (34) einwirkt, wobei diese Vorrichtung die folgenden Konfigurationen umfaßt:
- eine neutrale Konfiguration, in der sich die erste Klappe (16) in einer Position (P₀) mit Verschluß des ersten Lufteinlasses (16) befindet, während sich die zweite Klappe (24) in einer Position (P'₀) mit Verschluß des zweiten Lufteinlasses (2) befindet und in der die Drehzahl des Lüfters (30) gleich Null ist;
- mehrere "Außenluft"-Konfigurationen, in denen sich die zweite Klappe (24) in einer Position (P'₀) mit Verschluß des zweiten Lufteinlasses (22) befindet, während die erste Klappe (16) schrittweise von einer teilweise geöffneten Position (P₁) in eine Position (P₄) mit volLständiger Öffnung des ersten Lufteinlasses (14) verstellt und in der die Drehzahl des Lüfters (34) schrittweise erhöht wird;
- und mehrere "Innenluft"-Konfigurationen, in denen sich die erste Klappe (16) in einer Position (P₀) mit Verschluß des ersten Lufteinlasses (14) befindet, während die zweite Klappe (24) schrittweise von einer teilweise geöffneten Position (P'₁) in eine Position (P'₄) mit vollständiger Öffnung des zweiten Lufteinlasses (22) verstellt und in der die Drehzahl des Lüfters schrittweise erhöht wird.

2. Vorrichtung nach Anspruch 1 , **dadurch gekennzeichnet,** daß die erste Klappe (16) und die zweite Klappe (24) jeweils schwenkbar um eine Drehachse (18, 26) gelagert sind.

3. Vorrichtung nach Anspruch 2 , **dadurch gekennzeichnet,** daß die jeweiligen Drehachsen (18, 26) der ersten Klappe (16) und der zweiten Klappe (24) parallel verlaufen.

4. Vorrichtung nach einem der Ansprüche 2 und 3, **dadurch gekennzeichnet,** daß die erste Klappe (16) von der Position (P₀) mit Verschluß des ersten Lufteinlasses (14) bis zur Position (P₄) mit vollständiger Öffnung des ersten Lufteinlasses (14) und umgekehrt durch aufeinanderfolgende Drehbewegungen um jeweils eine Teilumdrehung verstellbar ist und daß die zweite Klappe (24) von der Position (P'₀) mit Verschluß des zweiten Lufteinlasses (22) bis zur Position (P'₄) mit vollständiger Öffnung des zweiten Lufteinlasses (22) und umgekehrt durch aufeinanderfolgende Drehbewegungen um jeweils eine Teilumdrehung verstellbar ist.

5. Vorrichtung nach Anspruch 4 , **dadurch gekennzeichnet,** daß in der neutralen Konfiguration die erste Klappe (16) und die zweite Klappe (24) voneinander entfernt sind, während in der Position (P₄) mit vollständiger Öffnung des ersten Lufteinlasses (14) ebenso wie in der Position (P'₄) mit vollständiger Öffnung der zweiten Lufteinlasses (22) die erste und die zweite Klappe jedesmal einander angenähert werden.

6. Vorrichtung nach einem der Ansprüche 1 bis 5, **dadurch gekennzeichnet,** daß sie die gleiche Anzahl an "Außenluft"-Konfigurationen, an "Innenluft"-Konfigurationen und an verschiedenen Drehzahlen des Lüfters (34) umfaßt.
